# EUROPÄISCHE PATENTSCHRIFT

(11) **EP 0 806 239 B1**
(45) Veröffentlichungstag und Bekanntmachung des Hinweises auf die Patenterteilung: **05.06.2002**
(21) Anmeldenummer: 97105033.1
(22) Anmeldetag: 25.03.1997
(51) Int. Cl.: B01J 19/12, A61C 13/06, A61C 13/20, A61C 19/00

(54) **Polymerisationsgerät sowie Verfahren zum Steuern eines Polymerisationsgeräts**
Polymerization apparatus and method for the control thereof
Appareil de polymérisation et procédé de contrôle dudit appareil

(30) Priorität: 08.05.1996 DE 19618542
(43) Veröffentlichungstag der Anmeldung: 12.11.1997
(73) Patentinhaber: Ivoclar Vivadent AG, 9494 Schaan (LI)
(72) Erfinder: Feurstein, Markus, 6800 Feldkirch-Tosters (AT); Mertins, Jürgen, 9473 Gams (CH)
(74) Vertreter: Baronetzky, Klaus, Dipl.-Ing.

(56) Entgegenhaltungen:
- EP-A- 0 128 324
- EP-A- 0 581 226
- DE-A- 3 725 363
- DE-A- 3 910 438
- DE-C- 19 542 984

## Beschreibung

Die Erfindung betrifft ein Polymerisationsgerät gemäß dem Anspruch 1 sowie ein Verfahren zum Steuern eines Polymerisationsgeräts, gemäß Anspruch 11.

Ein derartiges Polymerisationsgerät ist beispielsweise aus der DE-GM 86 27 655 zu entnehmen. Bei diesem Polymerisationsgerät umgibt eine Mehrzahl von Lichtstäben, die eine Lichtquelle bilden, ein zu polymerisierendes Werkstück. Eine Halogenlampe ist als Wärmequelle vorgesehen. Um eine gleichmäßige Bestrahlung zu gewährleisten, ist das zu polymerisierende Werkstück auf einem Drehteller angeordnet. Trotz der vergleichsweise aufwendigen Konstruktion ist das bekannte Polymerisationsgerät jedoch sowohl von der Handhabung her als auch von der Polymerisationsleistung her nicht befriedigend.

Es sind weitere Polymerisationsgeräte vorgeschlagen worden, bei denen die Wärmebeaufschlagung des zu polymerisierenden Werkstücks lediglich bei Bedarf vorgenommen wird. Eine derartige Lösung ist jedoch sehr der Einschätzung des Benutzers unterworfen und damit darauf angewiesen, daß der Benutzer eine ausreichende Erfahrung hat, einzuschätzen, in welchem Umfang die Lichthärtung durch die Hinzunahme der Erwärmung beschleunigt wird.

Insbesondere bei der Herstellung von Zahnersatzteilen mittels Lichtpolymerisation ist es jedoch wesentlich, daß die gebotene Aushärtzeit keinesfalls unterschritten wird, nachdem sonst die Gefahr besteht, daß Restmonomer in den Zahnersatzteilen verbleibt und der Polymerisationsgrad des ausgehärteten Materials unbefriedigend ist. In diesem Zusammenhang ist es besonders nachteilig, daß durch die Einwirkung der Wärme das Werkstück auch nach Abschluß des Polymerisationszyklus noch zu warm ist, um unmittelbar gehandhabt zu werden, so daß der Benutzer dazu neigt, die Wärmequelle nicht einzusetzen. Dies kann jedoch im Zweifelsfalle leicht zu Verwechslungen führen, zumal die Polymerisationszeit bei reiner Lichthärtung regelmäßig größer als bei der Zuhilfenahme der Wärmepolymerisation ist.

Demgegenüber liegt der Erfindung die Aufgabe zugrunde, ein Polymerisationsgerät gemäß Anspruch 1 bzw. 11 zu schaffen, das einen schnellen Polymerisationszyklus gewährleistet, ohne daß insbesondere im Dentalbereich unzureichend polymerisierte Werkstücke zu befürchten wären, wobei die Handhabung verbessert ist und ein Nachvergüten des Materials entfallen kann.

Diese Aufgabe wird erfindungsgemäß durch die Ansprüche 1 bzw. 11 gelöst. Vorteilhafte Weiterbildungen ergeben sich aus den Unteransprüchen.

Bei der in Anspruch 1 festgelegten Ausgestaltung der Erfindung ist die Lichtquelle in eine Art Haube integriert, die über das Werkstück stülpbar ist und anhebbar ist. Bei dieser Ausgestaltung ist überraschend eine besonders intensive Lichthärtung mit einem kurzen Polymerisationszyklus möglich, wenn die Lichtquellen sich nicht nur ziemlich knapp um das Werkstück erstrecken, sondern auch die Ober- und die Unterseite zusammen mit der Ringwand der Haube verspiegelt sind. Besonders günstig ist es, wenn die Lichtquelle durch Lichtstäbe gebildet ist, die sich kreisringförmig mit einem lichten Innendurchmesser erstrecken, der dem größten zu härtenden Werkstück entspricht. Es sich versteht, daß der lichte Innendurchmesser aus praktischen Gründen etwas größer gewählt werden kann, um bei der Handhabung eine Toleranz von beispielsweise einem Zentimeter zu ermöglichen.

Überraschend ergibt das erfindungsgemäße Verfahren in Anwendung auf das erfindungsgemäße Polymerisationsgerät eine bessere Verschleißfestigkeit des Endprodukts und die vollständige Entfernung von Restmonomer, obwohl erfindungsgemäß auf eine Nachvergütung durch Wärmenachbehandlung verzichtet werden kann.

Trotz der insofern lichttechnisch optimalen Ausgestaltung ist es nicht erforderlich, das zu behandelnde Dentalwerkstück in einer ganz bestimmten Position auf die Lagerplatte aufzubringen. Die Bedienung ist insofern vergleichsweise komfortabel.

Die Möglichkeit des Anhebens der Lichtquelle zusammen mit der Haube ergibt weiter den besonderen Vorteil, daß die Handhabung nach Beendigung des Polymerisationszyklus optimiert ist. Insbesondere ist das Werkstück umgehend von allen Seiten frei zugänglich und kühlt auch rasch und gleichmäßig ab, ohne daß es erst - wie bei der aus der vorstehenden Druckschrift bekannten Lösung - aus dem Gerät herausgezogen werden müßte.

Gemäß einer besonders vorteilhaften Ausgestaltung ist es vorgesehen, im Bereich unmittelbar hinter dem Werkstück ein Gebläse anzuordnen, das durch Anheben der Haube am Ende des Polymerisationszyklus beispielsweise für 30 Sekunden aktiviert wird und das Werkstück zusätzlich abkühlt.

Gemäß einer weiteren, besonders bevorzugten Ausführungsform ist es vorgesehen, daß die Wärmequelle zusätzlich zu der Lichtquelle in die Haube integriert ist. Hierdurch lassen sich gewichts- und materialsparend die gleichen Reflektoren, beispielsweise eine polierte Aluminiumoberfläche für die Licht- und die Wärmequelle einsetzen, und aufwendige Filtersysteme wie die bekannten Kantenfilter können vermieden werden. Zudem erfolgt bei kreisringförmiger Anordnung der Wärmestäbe konzentrisch zu den Lichtstäben der Lichtquelle eine gleichmäßige Beaufschlagung, was die gewünschte gleichmäßige Strahlungsbeaufschlagung zur Optimierung der Polymerisation sicherstellt.

Besonders vorteilhaft ist es ferner, daß durch das Anheben von der Lagerplatte das Werkstück auf einer die Lagerplatte umgebenden Arbeitsplatte, die auch einstückig mit dieser sein kann, frei verschieblich ist, so daß es auch bereits vor dem vollständigen Erkalten zur Seite geschoben werden kann, ohne daß der Kunststoff berührt werden muß, wobei dann umgehend das nächste Werkstück von der anderen Seite in den Arbeitsbereich geschoben werden kann.

Besonders güngstig ist es ferner, wenn die erfindungsgemäße Haube mit einer Hub-/Schwenkvorrichtung mit dem Rahmen des Polymerisationsgeräts verbunden ist. Mit einer derartigen Hub/Schwenkvorrichtung läßt sich die Haube vertikal wirksam anheben, wobei durch die anschließend an die Hubbewegung vorgesehene Schwenkbewegung der freie Zugang auch von nahezu senkrecht oben möglich ist, was der Ergonomie des Polymerisationsgeräts zugute kommt. Besonders günstig ist es in diesem Zusammenhang auch, daß die relativ warmen Wärmestrahler, die der Erwärmung des Werkstücks gedient haben, außerhalb des Eingriffs des Bedieners sind und insbesondere recht weit von dem Werkstück beabstandet verbleiben, wenn die Haube in ihre höchste obere Position verbracht wird.

Gemäß einer vorteilhaften Ausgestaltung ist es vorgesehen, die Bewegbarkeit der Haube mit einer an sich bekannten Gasdruckfeder zu unterstützen, die der Gewichtskompensation der Haube dient. Ferner kann eine elektrische und programmgesteuerte Steuerung vorgesehen sein, die bei Beendigung des Polymerisationszyklusses die Haube automatisch anhebt und in die oberste Schwenkposition bringt. Andererseits ist es auch möglich, durch mechanisches Schließen der Haube gegen den Widerstand der Gasdruckfeder das je gewählte Programm zu starten, was die Bedienung insofern vereinfacht.

Erfindungsgemäß ist eine besondere Steuerung für die Lichtquelle und die Wärmequelle vorgesehen, die die Polymerisation und insbesondere den Polymerisationszyklus sowohl hinsichtlich der Leistung als auch hinsichtlich der Bedienung optimiert.

Überraschend ergibt die erfindungsgemäße Abfolge von zunächst einer oder zwei reinen Belichtungsabschnitten, anschließend hieran einem Erwärmungszeitabschnitt, einem Temperaturhalte-Zeitabschnitt und anschließend hieran einer Ruhezeit unter Abschaltung von Licht- und Wärmequelle eine besonders wirksame kombinierte Licht- und Wärmepolymerisation, die frei von Störungen durch den Benutzer bleibt. Das Werkstück ist am Ende des Polymerisationszyklus bereits etwas abgekühlt, so daß es je nach Wahl der Zeitabschnitte recht gefahrlos transportiert werden kann.

Die gesteuerte Polymerisation mit den Schritten Lichtpolymerisation - Haltezeit - Zuschaltung von Wärme - Abkühlung ohne Licht und Wärme ergibt optimal polymerisierte Werkstücke hoher Verschleißfestigkeit, die keine Nachvergütung mehr benötigen, wobei zusätzlich die Spannung zwischen Metallkrone und Kunststoff minimal ist und überraschend die Spaltbildung unterbunden wird.

Gemäß einer alternativen Ausgestaltung ist es vorgesehen, die Lagerplatte als recht flache und auf die Unterlage deutlich aufgesetzte Lagerplatte auszubilden. Dies erleichtert die Aufstellbarkeit des Geräts.

Gemäß einer weiteren Ausgestaltung ist es vorgesehen, die Lagerplatte durch eine mit dem Gerät nicht verbundene und frei verschiebbare Alufolie auszubilden. Diese reflektiert die Strahlung der Licht- und der Wärmequelle, wobei dennoch eine freie Verschiebbarkeit, nämlich die Verschiebbarkeit des noch nicht vollständig abgekühlten Werkstücks zusammen mit der Aluminiumfolie, gegeben ist.

Weitere Einzelheiten, Vorteile und Merkmale des erfindungsgemäßen Polymerisationsgeräts sind in der nachfolgenden Beschreibung zweier Ausführungsbeispiele anhand der Zeichnungen näher erläutert.

Es zeigen:
- Fig 1: eine teilweise aufgebrochene Seitenansicht des erfindungsgemäßen Polymerisationsgeräts mit aufgeklappter Haube; und
- Fig 2: eine Draufsicht auf eine modifizierte Ausführungsform eines erfindungsgemäßen Polymerisationsgeräts.

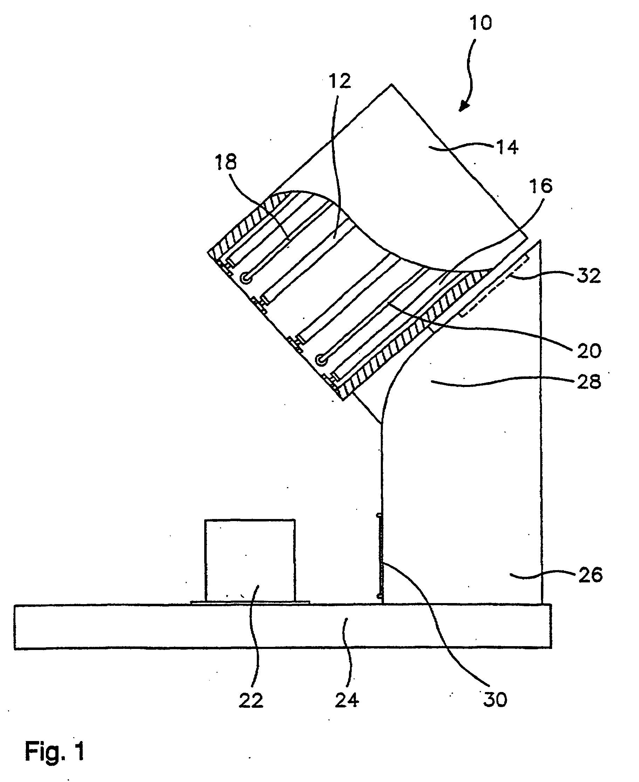

Das in Fig 1 dargestellte Polymerisationsgerät 10 weist eine Lichtquelle 12 mit mehreren um den Umfang einer Haube 14 verteilten Lichtstäben 16 sowie eine Wärmequelle 18 mit mehreren um den Umfang verteilten Wärmestäben 20 auf. Die Lichtstäbe 16 sind als Strahler sichtbaren Lichts mit ggf. geringem UV-Anteil ausgebildet und sollen ein Werkstück 22 beaufschlagen, wenn die Haube 14 geschlossen ist. Das Werkstück 22 ist auf einer Lagerplatte 24 angeordnet, die in dem dargestellten Ausführungsbeispiel fest mit einem Rahmen 26 des Geräts 10 verbunden ist, der auch ein Hub-/Schwenklager 28 des Polymerisationsgeräts für die Führung der Haube 14 aufnimmt. Der Rahmen weist ferner ein Gebläse 30 auf, das eine Doppelfunktion hat. Bei geschlossener Haube 14 dient das Gebläse der Kühlung der Lichtstäbe, die als Gaslampen ausgebildet sein können. Hierzu sind je hinter den Gaslampen Belüftungsschlitze vorgesehen, die sich im wesentlichen vertikal erstrecken und gezielt Kühlluft den Lichtstäben zuführen. Ein nicht dargestellter Ringkanal dient der Verbindung zwischen dem Druckstutzen des Gebläses und den Belüftungsschlitzen für die Lichtstäbe 16.

Im geöffneten Zustand des Geräts, bei dem die Haube 14 das Werkstück 22 freigibt, dient demgegenüber das Gebläse 30 der Kühlluft-Beaufschlagung des Werkstücks 22, das auf diese Weise schneller abkühlt. Es versteht sich, daß eine entsprechende Durchtrittsausnehmung für die Kühlluftzuführung zur Haube 14 vorgesehen ist.

In dem dargestellten Ausführungsbeispiel gemäß Fig. 1 ist die Lagerplatte 24 so groß ausgebildet, daß das Werkstück 22 frei verschoben werden kann und auch neben der Haube 14 verbleiben kann, wenn diese geschlossen wird. Hierdurch ist ein verzögerungsfreier Betrieb auch bei mehreren Werkstücken möglich, wobei ein Werkstück in einer Ruhephase noch abkühlen kann, während das nächste bereits polymerisiert wird.

Der die Lichtquelle 12 und die Wärmequelle 18 umgebende Wandbereich der Haube 14 besteht aus hochglanzpoliertem Aluminium. Gleiches gilt für die Deckwand der Haube 14 sowie für die Lagerplatte 24. Die Deckwand weist ferner einen Sensor für die Lichtleistung auf, der über die nicht dargestellte Steuereinrichtung des Polymerisationsgeräts ein Warnsignal abgibt, wenn die abgegebene Lichtleistung unter einen Standardwert fällt. Auf diese Weise ist es mit einfachen Mitteln möglich, festzustellen, ob alle Lichtstäbe 16 mit voller Leistung arbeiten oder ob beispielsweise einer ausgefallen ist oder seine Lichtleistung zu sehr abgefallen ist.

Die nicht dargestellte Steuereinrichtung weist unter anderem eine Bedienfläche 32 auf, die seitlich neben dem Bereich der Haube 14 vorgesehen ist. Die Bedienfläche 32 weist Tasten für die Einstellung der Lichtleistung auf, so daß je nach vorhandenem Polymerisationsgut die Lichtleistung eingestellt werden kann. Daneben ist über die Bedienfläche 32 die Programmwahl für das Polymerisationsgerät möglich.

Die erfindungsgemäße Steuerung sieht vor, daß mit Beginn eines Polymerisationszyklus die Lichtquelle 12 eingeschaltet wird. Das manuelle Schließen der Haube 14 leitet den Polymerisationszyklus ein und schaltet damit die Lichtquelle 12 ein. Nach 10 Minuten wird zusätzlich die Wärmequelle 18 eingeschaltet, wobei eine Aufheizung über einen Zeitraum von 5 Minuten erfolgt. Während einer Zeitdauer von weiteren fünf Minuten wird die Temperatur gehalten. Danach wird die Wärmequelle 18 und die Lichtquelle 12 abgeschaltet. Es folgt dann eine fünfminütige Abkühlphase, nach welcher der Polymerisationszyklus beendet ist. Dieses Programm kann durch die Bedienfläche 32 gewählt werden, wobei es sich versteht, daß die genauen Zeiten, die im Grunde fest eingestellt sind, bei Bedarf an die Erfordernisse angepaßt werden können.

Gemäß einem weiteren Programm, das universell für alle lichthärtenden Materialien verwendbar ist, wird die Lichtquelle 12 während 10 Minuten eingeschaltet, wobei die Wärmequelle 18 jedoch uneingeschaltet verbleibt.

Gemäß zwei weiteren Programmen ist es vorgesehen, daß der Benutzer die Einschaltdauer der Lichtquelle 12 und der Wärmequelle 18 je auf seine Bedürfnisse abstimmt und einen Polymerisationszyklus entsprechend programmiert.

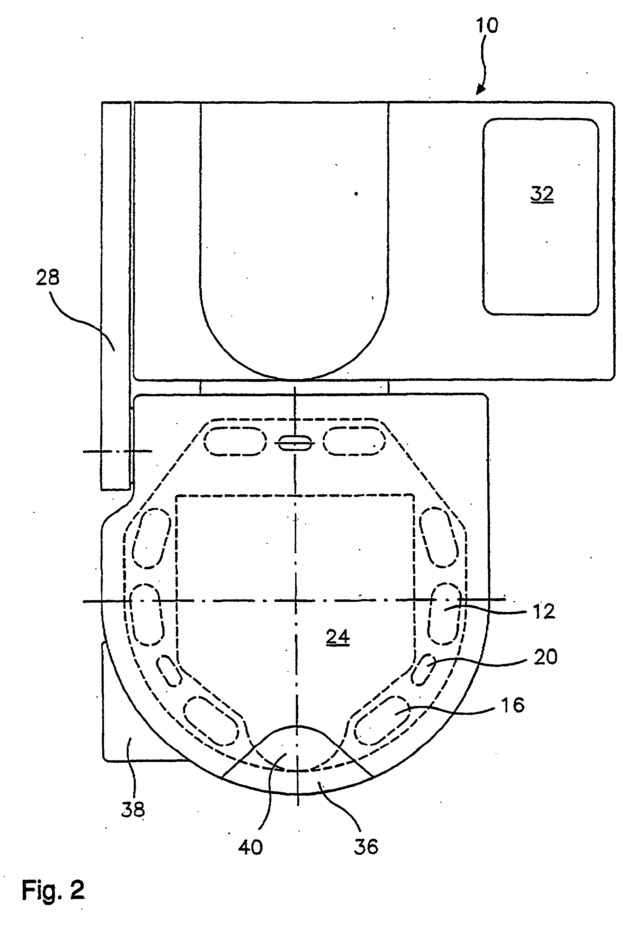

Eine weitere Ausführungsform des erfindungsgemäßen Polymerisationsgeräts ist aus Fig. 2 ersichtlich. Bei dieser Ausführungsform erstrecken sich acht Lichtstäbe 16 ringsum und im wesentlichen gleichmäßig verteilt in der Haube 14. Ferner erstrecken sich drei Wärmestäbe 20 ebenfalls ringsum und gleichmäßig verteilt in der Haube 14. Das Schwenklager 28 ist einseitig ausgebildet und führt mittels einer Gasdruckfeder die Haube 14.

Ein Druckstutzen leitet Kühlluft den Lichtstäben 16 zu. In einer Aussparung 36 der Haube 14 ist ein nicht dargestelltes Sichtloch vorgesehen. Die Lichtquelle 12 kann mit reduzierter Leistung betrieben werden, um eine optische Kontrolle des eingebrachten Werkstücks 22 auch bei geschlossener Haube 14 zu ermöglichen. Seitlich an der Haube 14 ist vorne ein Griff 38 angeformt, der der Einstellung der Schwenk-/Hub-Stellung der Haube 14 dient. Die Lagerplatte 24 weist eine besondere Ausgestaltung mit einem zur Gerätevorderseite weisenden Vorsprung 40 auf. Die Lichtstäbe 16 sind einseitig befestigt und hängen von oben in ihren Halterungen, was die Austauschbarkeit verbessert.

## Patentansprüche

1. Polymerisationsgerät, mit einer Lichtquelle, die Licht zu einem zu polymerisierenden Werkstück leitet, das auf einer Lagerplatte angeordnet ist, wobei das Licht der Lichtquelle mindestens von zwei Seiten auf das Werkstück fällt, mit einer Wärmequelle für das Werkstück und mit einer Steuereinrichtung für das Polymerisationsgerät und für die programmgesteuerte Einschaltung der Wärmequelle während eines Polymerisationszyklus, bei dem die Lichtquelle (12) in eine anhebbare Haube (14) integriert ist, die beim Anheben das Werkstück (22) allseits freigibt, und die an einem die Lagerplatte (24) tragenden Rahmen (26) kombiniert hub- und schwenkbeweglich gelagert ist.

2. Polymerisationsgerät nach Anspruch 1, **dadurch gekennzeichnet, daß** die Wärmequelle (18) ebenfalls in der Haube (14) angeordnet ist.

3. Polymerisationsgerät nach einem der vorhergehenden Ansprüche, **dadurch gekennzeichnet, daß** die Lichtquelle (12) als eine Mehrfachanordnung von sich senkrecht in der Haube (14) erstreckenden Lichtstäben (16), insbesondere Lichtröhren oder Gaslampen, ausgebildet ist, die das Werkstück (22) umgeben.

4. Polymerisationsgerät nach einem der vorhergehenden Ansprüche, **dadurch gekennzeichnet, daß** die Wärmequelle (18) eine Mehrzahl, insbesondere drei, Wärmestäbe (20) aufweist, die sich vertikal üm das Werkstück (22) erstrecken.

5. Polymerisationsgerät nach einem der vorhergehenden Ansprüche, **dadurch gekennzeichnet, daß** die Haube (14) gewichtskompensiert gelagert ist und während eines Polymerisationszyklus blockiert ist.

6. Polymerisationsgerät nach einem der vorhergehenden Ansprüche, **dadurch gekennzeichnet, daß** die Haube (14) einen Lichtraum umgibt, der die Lichtquelle (12) und die Wärmequelle (18) umschließt und dessen lichte Weite größer als das zu polymerisierende Werkstück (22) ist, wobei der Lichtraum allseitig und insbesondere auch hinter den Licht- und Wärmequellen (12,18) verspiegelt ist.

7. Polymerisationsgerät nach einem der vorhergehenden Ansprüche, **dadurch gekennzeichnet, daß** eine Verspiegelung eines Lichtraums des Polymerisationsgeräts (10) eine polierte Metalloberfläche, insbesondere eine polierte Aluminiumoberfläche aufweist.

8. Polymerisationsgerät nach einem der vorhergehenden Ansprüche, **dadurch gekennzeichnet, daß** ein Sensor oder Steuereinrichtung in einem Lichtraum integriert ist und die abgegebene Lichtleistung erfaßt.

9. Polymerisationsgerät nach einem der vorhergehenden Ansprüche, **dadurch gekennzeichnet, daß** die Steuereinrichtung einen Startschalter aufweist, der mit der Bewegung der Haube (14) beim Schließen gekoppelt ist und einen Polymerisationszyklus startet.

10. Polymerisationsgerät nach einem der vorhergehenden Ansprüche, **dadurch gekennzeichnet, daß** Lüftungsschlitze für die Kühlung der Lichtquelle (12) oberhalb oder neben jedem Lichtstab (16) ausgebildet sind.

11. Verfahren zum Steuern eines Polymerisationsgeräts, bei dem ein zu polymerisierendes Werkstück von einer Lichtquelle beaufschlagbar und zusätzlich von einer Wärmequelle erwärmbar ist, wobei die Licht- und die Wärmezufuhr über einen Polymerisationszyklus mit einer Steuereinrichtung gesteuert wird und die Lichtquelle mit Beginn des Polymerisationszyklus eingeschaltet wird, **dadurch gekennzeichnet, daß** nach dem Einschalten der Beleuchtung die Wärmequelle eingeschaltet wird und das Werkstück während einer Erwärmungszeit erwärmt wird, daß dann die Temperatur gehalten wird und daß hieran anschließend während einer Ruhezeit und/oder Abkühlzeit bis zum Ende des Polymerisationszyklus die Licht- und die Wärmequelle abgeschaltet werden.

12. Verfahren nach Anspruch 11, **dadurch gekennzeichnet, daß** der Polymerisationszyklus in im wesentlichen gleiche Zeitabschnitte eingeteilt ist, wobei während der ersten beiden Zeitabschnitte lediglich die Lichtquelle eingeschaltet ist, während des dritten Zeitabschnitts die Lichtquelle und die Wärmequelle eingeschaltet werden, während des vierten Zeitabschnitts die Lichtquelle eingeschaltet ist und die Temperatur über die Wärmequelle geregelt wird und während des fünften Zeitabschnitts die Lichtquelle und die Wärmequelle abgeschaltet werden.

13. Verfahren nach Anspruch 12, **dadurch gekennzeichnet, daß** ein Abschnitt des Polymerisationszyklus je etwa fünf Minuten beträgt.

14. Verfahren nach einem der Ansprüche 11 bis 13, **daduch gekennzeichnet, daß** die Steuereinrichtung mehrere unterschiedliche Programme für die Steuerung des Polymerisationsgeräts erlaubt, wobei ein zweites Programm eine Einschaltung der Lichtquelle während zweier Zeitabschnitte erlaubt und die Wärmequelle abgeschaltet bleibt.

15. Verfahren nach einem der Ansprüche 11 bis 14, **dadurch gekennzeichnet, daß** die Steuereinrichtung eine Programmiereinrichtung für die Abfolge von Einschaltabschnitten für die Lichtquelle und die Wärmequelle aufweist, die insbesondere durch unmittelbare Vorgabe von Lichtquellen- und Wärmequellen-Einschaltabschnitten programmierbar ist.

16. Verfahren nach einem der Ansprüche 11 bis 15, **dadurch gekennzeichnet, daß** die Lichtquelle regelmäßig auf voller Leistung eingeschaltet ist und die Wärmequelle über eine Rückkopplung eine gewählte erhöhte Temperatur von insbesondere etwa 60°C konstant hält.

17. Polymerisationsgerät mit einer Lichtquelle und einer Wärmequelle, **gekennzeichnet durch** eine Steuereinrichtung für die programmgesteuerte Einschaltung der Wärmequelle (18) während eines Polymerisationszyklus.

## Claims

1. A polymerisation apparatus having a light source which directs light to a workpiece to be polymerised which is disposed on a mounting plate, wherein the light of the light source is incident on the workpiece from at least two sides, having a heat source for the workpiece and having a control means for the polymerisation apparatus and for the program-controlled switching-on of the heat source during a polymerisation cycle, in which the light source (12) is integrated into a raisable hood (14) which, upon being raised, uncovers the workpiece (22) on all sides and which is mounted on a frame (26) carrying the mounting plate (24) for combined lifting and pivoting movement.

2. A polymerisation apparatus according to Claim 1, **characterised in that** the heat source (18) is also disposed in the hood (14).

3. A polymerisation apparatus according to any one of the preceding Claims, **characterised in that** the light source (12) is in the form of an array of light bars (16) extending perpendicularly in the hood (14), in particular light tubes or gas bulbs, which surround the workpiece (22).

4. A polymerisation apparatus according to any one of the preceding Claims, **characterised in that** heat source (18) has a plurality, in particular three, heating bars (20) which extend vertically about the workpiece (22).

5. A polymerisation apparatus according to any one of the preceding claims, **characterised in that** the hood (14) is mounted in a weight-compensated manner and is locked during a polymerisation cycle

6. A polymerisation apparatus according to any one of the preceding claims, **characterised in that** the hood (14) surrounds a light chamber which encloses the light source (12) and the heat source (18) and the unobstructed width of which is greater than the workpiece (22) to be polymerised, wherein the light chamber is mirror-coated on all sides and, in particular, also behind the light and heat sources (12,18).

7. A polymerisation apparatus according to any one of the preceding Claims, **characterised in that** a mirror-coating of a light chamber of the polymerisation apparatus (10) has a polished metal surface, in particular a polished aluminium surface.

8. A polymerisation apparatus according to any one of the preceding claims, **characterised in that** a sensor of the control means is integrated in a light chamber and detects the emitted light output.

9. A polymerisation apparatus according to any one of the preceding claims, **characterised in that** the control means has a starting switch which is coupled with the movement of the hood (14) and upon closure starts a polymerisation cycle.

10. A polymerisation apparatus according to any one of the preceding claims, **characterised in that** ventilation slots for cooling the light source (12) are formed above or near each light bar (16).

11. A method of controlling a polymerisation apparatus, in which a workpiece to be polymerised can be acted upon by a light source and can additionally be heated by a heat source, wherein the light and heat input over one polymerisation cycle is controlled by a control means and the light source is switched on at the beginning of the polymerisation cycle, **characterised in that** after the lighting has been switched on the heat source is switched on and the workpiece is heated for a heating period, **in that** the temperature is then maintained and **in that**, subsequently, the light and heat sources are switched off for a rest period and/or cooling period until the end of the polymerisation cycle.

12. A method according to Claim 11, **characterised in that** the polymerisation cycle is divided into substantially equal periods, wherein during the first two periods only the light source is switched on, during the third period the light source and the heat source are switched on, during the fourth period the light source is switched on and the temperature is controlled via the heat source and during the fifth period the light source and the heat source are switched off

13. A method according to Claim 12, **characterised in that** one period of the polymerisation cycle amounts to approximately five minutes in each case.

14. A method according to any one of Claims 11 to 13, **characterised in that** the control means allows a plurality of different programs for controlling the polymerisation apparatus, wherein a second program enables the light source to be switched on during two periods of time and the heat source remains switched off.

15. A method according to any one of Claims 11 to 14, **characterised in that** the control means has a programming device for the sequence of on-periods for the light source and the heat source, which device can be programmed in particular by direct entry of light source and heat source on-periods.

16. A method according to any one of Claims 11 to 15, **characterised in that** the light source is regularly switched on to full power and the heat source maintains constant a selected high temperature of in particular approximately 60°C via feedback.

17. A polymerisation apparatus with a light source and a heat source, **characterised by** a control means for the program-controlled switching-on of the heat source (18) during one polymerisation cycle.

## Revendications

1. Appareil de polymérisation, avec une source de lumière, guidant de la lumière vers une pièce à polymériser, disposée sur une plaque de support, lumière de la source de lumière venant au moins de deux côtés sur la pièce, avec une source de chaleur pour la pièce et avec un dispositif de commande pour l'appareil de polymérisation et pour la mise en service, commandée par un programme, de la source de chaleur pendant un cycle de polymérisation, dans lequel la source de lumière (12) est intégrée dans un capot (14) levable qui, lors du levage, libère de tous côtés l'accès à la pièce (22) et qui est monté avec une mobilité combinée en levée et en pivotement sur un cadre (26) portant la plaque de pose (24).

2. Appareil de polymérisation selon la revendication 1, **caractérisé en ce que** la source de chaleur (18) est également disposée dans le capot (14).

3. Appareil de polymérisation selon l'une des revendications précédentes, **caractérisé en ce que** la source de lumière (12) est réalisée, à la façon d'un agencement multiple, par des barres lumineuses (16), en particulier des tubes lumineux ou des lampes à gaz, s'étendant perpendiculairement dans le capot (14); qui entourent la pièce (22).

4. Appareil de polymérisation selon l'une des revendications précédentes, **caractérisé en ce que** la source de chaleur (18) présente une pluralité, et en particulier trois barres de chauffage (20) qui s'étendent verticalement autour de la pièce (22).

5. Appareil de polymérisation selon l'une des revendications précédentes, **caractérisé en ce que** le capot(14) est monté avec un contrepoids et est bloqué pendant le déroulement d'un cycle de polymérisation.

6. Appareil de polymérisation selon l'une des revendications précédentes, **caractérisé en ce que** le capot(14) entoure un espace lumineux qui enclôt la source de lumière (12) et la source de chaleur (18) et dont la distance libre est supérieure à la dimension de la pièce (22) à polymériser, l'espace lumineux étant de tous côtés réfléchissant et en particulier également derrière les sources de lumière et de chaleur (12, 18).

7. Appareil de polymérisation selon l'une des revendications précédentes, **caractérisé en ce qu'**un élément rendant réfléchissant l'espace lumineux du dispositif de polymérisation (10) présente une surface métallique polie, en particulier une surface d'aluminium polie.

8. Appareil de polymérisation selon l'une des revendications précédentes, **caractérisé en ce qu'**un capteur du dispositif de commande est intégré dans un espace lumineux et appréhende la puissance lumineuse fournie.

9. Appareil de polymérisation selon l'une des revendications précédentes, **caractérisé en ce que** le dispositif de commande présente un interrupteur de démarrage qui est couplé au mouvement du capot (14) lors de la fermeture et qui lance un cycle de polymérisation.

10. Appareil de polymérisation selon l'une des revendications précédentes, **caractérisé en ce que** des fentes d'aération, pour assurer le refroidissement de la source de lumière (12), sont réalisées au-dessus ou à côté de chaque barre lumineuse (16).

11. Procédé de commande d'un dispositif de polymérisation, pour lequel une pièce à polymériser est susceptible d'être atteinte par une source de lumière et en plus est susceptible d'être chauffée par une source de chaleur, l'apport en lumière et en chaleur étant commandé d'après un cycle de polymérisation, à l'aide d'un dispositif de commande et la source de lumière étant mise en service au début du cycle de polymérisation, **caractérisé en ce qu'**après la mise en service de l'illumination la source de chaleur est mise en service et la pièce façonnée est chauffée pendant une durée de chauffage, **en ce qu'**ensuite la température est maintenue à la valeur atteinte et **en ce qu'**ensuite, pendant un temps de repos et/ou un temps de refroidissement, la source de lumière et la source de chaleur sont mises hors de service, jusqu'à l'achèvement du cycle de polymérisation.

12. Procédé selon la revendication 11, **caractérisé en ce que** le cycle de polymérisation est subdivisé en des intervalles temporels, sensiblement identiques, sachant que pendant les deux premiers intervalles temporels seule la source de lumière est mise en service, pendant le troisième intervalle temporel, la source de lumière et la source de chaleur sont mises en service, pendant le quatrième intervalle temporel, la source de lumière est mise en service et la température est réglée par l'intermédiaire de la source de chaleur et pendant le cinquième intervalle temporel, la source de lumière et la source de chaleur sont mises hors service.

13. Procédé selon la revendication 12, **caractérisé en ce qu'**un intervalle temporel du cycle de polymérisation dure respectivement à peu près cinq minutes.

14. Procédé selon l'une des revendications 11 à 13, **caractérisé en ce que** le dispositif de commande permet plusieurs programmes différents pour la commande du dispositif de polymérisation, sachant qu'un deuxième programme permet une mise en service de la source de lumière pendant deux intervalles temporels et la source de chaleur restant hors service.

15. Procédé selon l'une des revendications 11 à 14, **caractérisé en ce que** le dispositif de commande présente un dispositif de programmation pour la succession des intervalles temporels de mise en service de la source de lumière et de la source de chaleur, qui en particulier est programmable par allocation directe d'intervalle temporel de mise en service de la source de lumière et de la source de chaleur.

16. Procédé selon l'une des revendications 11 à 15, **caractérisé en ce que** la source de lumière est mise en service, en règle générale, à pleine puissance et la source de chaleur, par l'intermédiaire d'un couplage rétroactif, maintient à une valeur constante une température élevée souhaitée, en particulier d'environ 60° C.

17. Appareil de polymérisation, avec une source de lumière et une source de chaleur, **caractérisé par** un dispositif de commande pour la mise en service sous la commande d'un programme de la source de chaleur (18) pendant le déroulement d'un cycle de polymérisation.
